# EUROPEAN PATENT SPECIFICATION

(11) **EP 0 632 870 B1**
(45) Date of publication and mention of the grant of the patent: **18.06.1997**
(21) Application number: 93908251.7
(22) Date of filing: 01.04.1993
(51) Int. Cl.: F16H 3/093, F16H 55/14

(54) **MOTOR VEHICLE GEARBOX**
KRAFTFAHRZEUGGETRIEBE
BOITE DE VITESSES DESTINEE A UN VEHICULE AUTOMOBILE

(30) Priority: 01.04.1992 SE 9201019
(43) Date of publication of application: 11.01.1995
(73) Proprietor: AB VOLVO, 405 08 Göteborg (SE)
(72) Inventor: THOR, Kenneth, S-423 41 Torslanda (SE)
(74) Representative: Hellbom, Lars Olof
(86) International application number: SE9300280
(87) International publication number: WO9320367

(56) References cited:
- SE-B- 450 943
- US-A- 3 647 534
- PATENT ABSTRACTS OF JAPAN, Vol. 12, No. 73, M-674; & JP,A,62 215 165 (SUZUKI MOTOR CO LTD), 21 Sept 1987 (21.09.87).

## Description

The present invention relates to a motor vehicle gearbox comprising the features as defined in the preamble of claim 1 which are well-known for the person skilled in the art. In most cars with manual gearboxes, mechanical chatter is present during idling and driving at low engine revolutions. The noise arises as the teeth of the gear wheels impact each other at a certain frequency when an acceleration is imparted to the gear wheels in the gearbox due to uneven running of the motor at low revs. This unevenness is transmitted via the clutch and input shaft and is dependent on the engine as well as lag in the gearbox. The engine's flywheel has larger angular acceleration and amplitude of oscillation at low revs, so that the idling noise in most cases increases with reduced revs. A low idling speed is however generally desirable since it results in better fuel economy.

Several different methods for damping or totally eliminating idling chatter in gearboxes are known. For example, clutches with particular rigidity and damping can be used, the moment of inertia of the flywheel can be increased or the tooth clearance reduced. In addition, friction brakes can be used in the gearbox, though these tend to adversely affect the gear change quality. In most cases these measures are insufficient to dampen the chatter or are expensive since they require relatively comprehensive modification to existing components. As regards reduction of the tooth clearance, from a functional and production/technical aspect it is impossible to obtain such a small clearance that effective damping is achieved.

Several of the above-mentioned disadvantages are eliminated by means of an arrangement in which one gear wheel of a pair of meshing gear wheels has a hub portion on which a gear wheel in the form of a thin disc with the same tooth pattern as the actual gear wheel is rotatably carried. Resilient elements are located between the gear wheel and the disc and are pretensioned in the gear wheel's engagement position. Such an arrangement entails low production costs and high efficiency and, thanks to its damping properties, is uninfluenced by the natural frequency of the transmission components.

This arrangement does however have certain limits. On the one hand, the tooth clearance is eliminated only between the gear wheel pair which has a gear wheel with a pretensioned disc and, on the other hand, due to production techniques, such a gear disc cannot be positioned on the side of the gear wheel which is provided with teeth for engagement with a clutch sleeve. This can of course in certain circumstances restrict its use in gearboxes.

The object of the present invention is to provide a gearbox of the type according to the preamble of claim 1 with a simple pretensioning arrangement which can eliminate tooth clearance between several sets of gear wheels on three shafts.

This is achieved in accordance with the present invention by the features of claim 1.

In such a gearbox, a take-up force is applied by just one pretensioned gear wheel to all shafts in the gearbox in all gears and in neutral.

The invention has been developed particularly, though not exclusively, for five-speed gearboxes, with these gearboxes having sufficient "spare" room on the one intermediate shaft which is used only for torque transmission in fifth and reverse gear. Advantageously, a pretensioned gear wheel can be arranged in engagement with the releasable gear wheel on the input shaft which engages with the gear wheel for third gear on the other intermediate shaft.

The invention will be described in greater detail by way of example and with reference to the annexed drawings, in which:
- Fig. 1: is a sectional view through a gearbox according to the present invention;
- Fig. 2: is an elevational view of a component in Fig. 1;
- Figs. 3 and 4: are cross sections through parts making up the component of Fig. 2, and
- Fig. 5: is a plan view of the part shown in Fig. 3

In the drawings, reference numeral 1 denotes the housing of a five-speed motor vehicle gearbox which has an input shaft 2, a first intermediate shaft 3, a second intermediate shaft 4 and an output shaft 5.

The input shaft 2 cooperates with a clutch, only a part 6 of which is shown. The input shaft is provided with first and second fixed gear wheels 7, 8 resp., a gear ring 9 milled directly on the shaft, and a rotatably carried gear wheel 10 which is lockable to the shaft via a clutch and synchromesh arrangement, generally denoted by numeral 11, comprising an axially displaceable clutch sleeve 12. With the aid of the clutch arrangement 11, the input shaft 2 and the output shaft 5 can be locked up as a single unit for direct drive.

Each of the intermediate shafts 3, 4 presents a fixed gear wheel 13, 14 resp. which meshes with a fixed gear wheel 15 of equal size on the output shaft 5. In addition, the first intermediate shaft 3 presents a fixed gear wheel 16 which meshes with the rotatably carried gear wheel 10 on the input shaft 2.

The gear wheel 7 on the input shaft 2 meshes with a freely rotatable gear wheel 17 on the second intermediate shaft 4. The gear wheel 17 is lockable to the intermediate shaft 4 via a clutch arrangement, generally denoted by 18, which includes an axially displaceable clutch sleeve 19. The gear wheels 8 and 9 on the input shaft 2 respectively engage with gear wheels 20, 21 which are freely rotatable on the first intermediate shaft 3. The gear wheels 20, 21 are alternately lockable on the shaft 3 via a clutch arrangement, generally denoted by 22, which includes an axially displaceable clutch sleeve 23. The gear wheel 21 is combined with a gear wheel 24 which meshes with a gear wheel 25 (in practice the shafts 2, 3 and 4 are oriented in a V-shape) which in turn is freely rotatably carried on and lockable to the shaft 4 via the clutch arrangement 18.

The torque transmission paths in the various gears are as follows:

| | |
|---|---|
| First gear: | gear wheels 9, 21, 13 and 15 |
| Second gear: | gear wheels 8, 20, 13 and 15 |
| Third gear: | gear wheels 10, 16, 13 and 15 |
| Fourth gear: | direct, shaft 2 to shaft 5 |
| Fifth gear: | gear wheels 7, 17, 14 and 15 |
| Reverse: | gear wheels 9, 21, 24, 25, 14 and 15 |

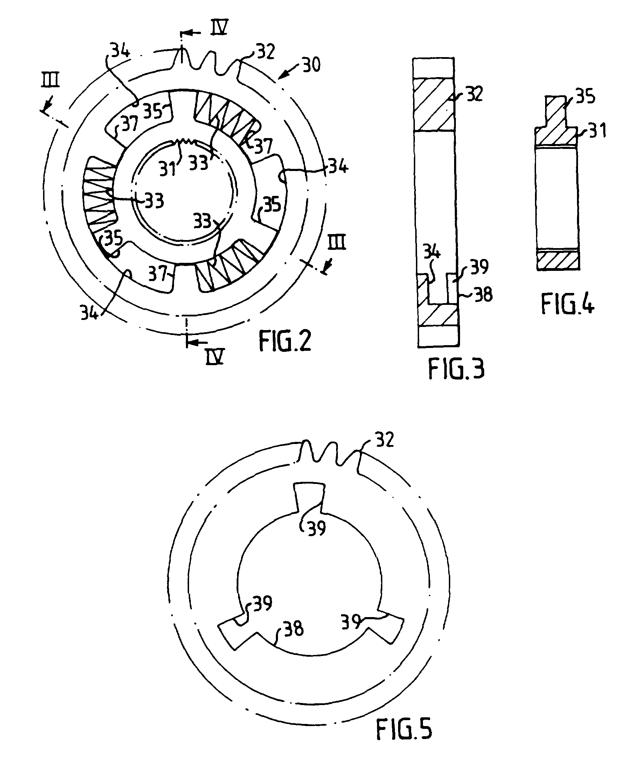

According to the invention, the second intermediate shaft 4 carries a gear wheel, generally denoted by 30, which is of the same diameter as the gear wheel 16 and similarly meshes with the gear wheel 10 on the input shaft. The gear wheel 30 is shown in greater detail in Figs. 2 to 5 and consists of a hub portion 31 with splines for non-rotatable attachment of the hub portion to the shaft 4, a circumferential gear ring 32 and three helical springs 33 therebetween. Each spring 33 is accommodated in an arc-shaped curved recess or slot 34 in the inner circumferential surface of the gear ring 32. The hub portion 31 is formed with three equally spaced projections or dogs 35, each of which extends into a slot 34 and forms a stop for the one end of the spring 33 in the slot. The other end of the spring abuts an end surface 37 in the slot 34.

In one of its opposed sidewalls 38 (Fig. 5), each slot 34 presents an opening 39, the shape of which is adapted to the shape of the projection 35. The three openings are distributed in accordance with that of the projections 35 on the hub portion 31 so that the hub portion can be axially inserted into the gear ring 32 with the projections placed straight in front of the openings 39 and then rotated like a bayonet connection.

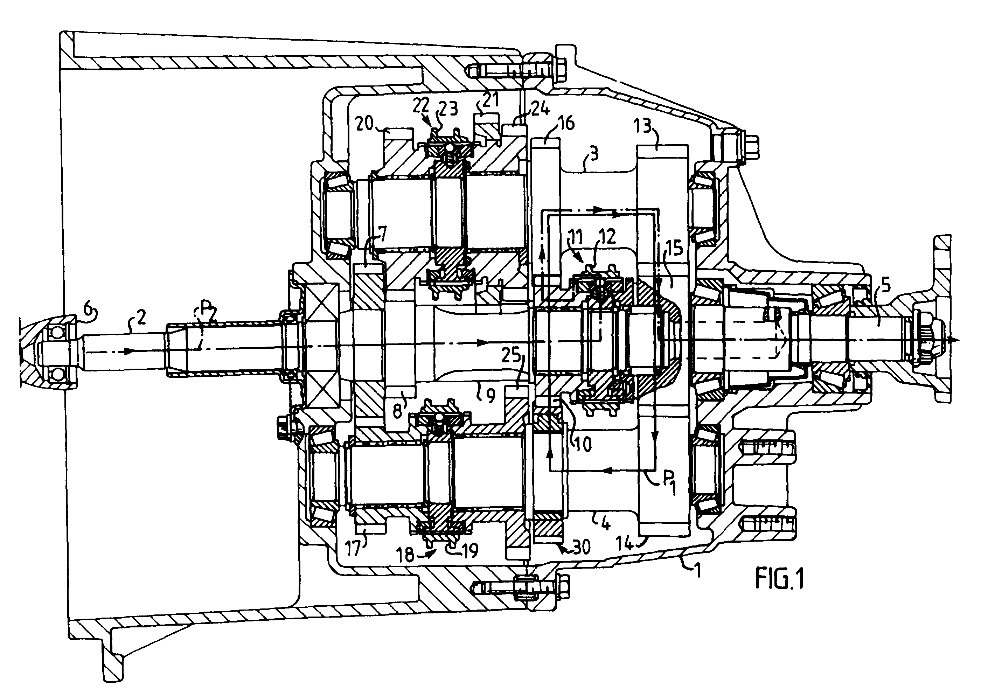

When rotating the hub portion 31 clockwise (see Fig. 2) in relation to the gear ring 32, the springs 33 are tensioned. With tensioned springs, the hub portion 31 is slid along the splines of the intermediate shaft 4 at the same time that the gear ring 32 is brought to engage with the gear wheel 10 on the input shaft 2. In this manner, a take-up effect is achieved in all gears, and in neutral. In Fig. 1, P₁ denotes the transmission path of the take-up force. The force transmission path in third gear is illustrated by way of example by P2. By means of the take-up force, the impact of the teeth flanks against each other due to irregular torsional forces is prevented.

It is to be understood that the expression "fixed gear wheel" means that the gear wheel is fixed to its shaft so as not to be rotatable with respect to the shaft. The expression "releasable gear wheel" means that the gear wheel can optionally be locked to the shaft to thereby rotate therewith, or can be disengaged from the shaft to freely rotate thereon.

## Claims

1. Motor vehicle gearbox comprising:
- an input shaft (2) carrying gear wheels (7 - 9),
- two intermediate shafts (3 and 4) carrying gear wheels (20, 21 and 17) meshing with gear wheels of said input shaft to provide cooperating pairs of gear wheels (20/8, 21/9 and 17/7)
- at least one gear wheel of each cooperating pair of gear wheels being releasable from its shaft so that only one of the two intermediate shafts (3 and 4) is drivable at a time, and
- an output shaft (5) carrying a gear wheel (15) engaging a fixed gear wheel (13, 14) provided on each of said intermediate shafts, characterized in that
- a releasable gear wheel (10) is provided on the input shaft and meshes with two equal-sized gear wheels (16, 30), each of which is non-releasably arranged on its respective intermediate shaft, and
- at least one of said non-releasable gear wheels comprises a hub portion (31) and a gear ring (32), with the hub portion being fixed to the intermediate shaft whilst the gear ring is restrictively rotatable with respect to the hub portion, and pretensioned spring means (33) are operative between the gear ring and the hub portion.

2. Motor vehicle gearbox according to claim 1, wherein said at least one non-releasable gear wheel (30) is a co-rotating gear wheel having no torque transmitting function, whilst said other non-releasable gear wheel (16) is arranged to transmit torque to its associated intermediate shaft (3).

3. Motor vehicle gearbox according to claim 1 or 2 having five forward gears and one reverse gear, whereby torque in the first, second and third forward gear is transmitted via the one intermediate shaft, and whereby torque in the fifth and reverse gear is transmitted via the other intermediate shaft on which said at least one non-releasable gear wheel (30) is provided.

4. Motor vehicle gearbox according to any one of claims 1 to 3, wherein said gear ring (32) comprises in its inner circumferential surface at least one recess (34) into which projects a radially outwardly directed dog (35) of the hub portion (31), and wherein a spring member (33) is accommodated between an end surface of the recess and a surface of the dog.

5. Motor vehicle gearbox according to claim 4, wherein an opening (39) is provided in one side wall (38) of said gear ring (32) and opens to said recess (34) through which opening said dog (35) is axially inserted during assembly of said at least one non-releasable gear wheel.

6. Motor vehicle gearbox according to claim 4 or 5, wherein said gear ring (32) comprises in its inner circumferential surface a plurality of uniformally spaced recesses (34) into each of which projects a respective radially outwardly directed dog (35) provided on the hub portion (31).

7. Motor vehicle gearbox according to claim 3, wherein said input shaft comprises a clutch means (11) which has a first engage position to lock said releasable gear wheel (10) to said input shaft, a second engage position to lock the output shaft (5) to the input shaft providing the fourth forward gear and an intermediate neutral position to release said releasable gear wheel (10) and the output shaft from the input shaft.

## Patentansprüche

1. Kraftfahrzeuggetriebe umfassend:
- eine Antriebswelle (2), die Zahnräder (7-9) trägt,
- zwei Zwischenwellen (3 und 4), die mit Zahnrädern der Antriebswelle kämmende Zahnräder (20, 21 und 17) trägt, um zusammenwirkende Zahnradpaare (20/8, 21/9 und 17/7) zu schaffen,
- wobei zumindest ein Zahnrad eines jeden zusammenwirkenden Zahnradpaares von seiner Welle lösbar ist, so daß zu einem Zeitpunkt nur eine der zwei Zwischenwellen (3 und 4) antreibbar ist, und
- eine Abtriebswelle (5), die ein Zahnrad (15) trägt, das in ein auf jeder der Zwischenwellen geschaffenes festes Zahnrad (13, 14) eingreift, dadurch gekennzeichnet, daß
- auf der Antriebswelle ein lösbares Zahnrad (10) geschaffen ist und mit zwei gleich groß bemessenen Zahnrädern (16, 30) kämmt, wovon jedes auf seiner jeweiligen Zwischenwelle nicht lösbar angeordnet ist,
- zumindest eines der zwei nicht lösbaren Zahnräder einen Nabenabschnitt (31) und einen Zahnkranz (32) umfaßt, wobei der Nabenabschnitt auf der Zwischenwelle fixiert ist, während der Zahnkranz bezüglich dem Nabenabschnitt beschränkt drehbar ist, und vorgespannte Federmittel (33) wirken zwischen dem Zahnkranz und dem Nabenabschnitt.

2. Kraftfahrzeuggetriebe nach Anspruch 1, in welchem das zumindest eine nicht lösbare Zahnrad (30) ein gleich schnell rotierendes Zahnrad ist, das keine Drehmoment-Übertragungsfunktion hat, während das andere nicht lösbare Zahnrad (16) angeordnet ist, um ein Drehmoment zu seiner zugehörigen Zwischenwelle (3) zu übertragen.

3. Kraftfahrzeuggetriebe nach Anspruch 1 oder 2, das fünf Vorwärtsgänge und eine Rückwärtsgang besitzt, wobei im ersten, zweiten und dritten Vorwärtsgang über die eine Zwischenwelle ein Drehmoment übertragen wird, und wobei im fünften Gang und im Rückwärtsgang über die andere Zwischenwelle, auf welcher das zumindest eine nicht lösbare Zahnrad geschaffen ist, ein Drehmoment übertragen wird.

4. Kraftfahrzeuggetriebe nach einem der Ansprüche 1 bis 3, in welchem der Zahnkranz (32) an seiner Innenumfangsfläche zumindest einen Einschnitt (34) umfaßt, in den ein radial auswärts gerichteter Mitnehmer (35) des Nabenabschnitts (31) vorkragt, und bei dem ein Federelement (33) zwischen einer Stirnfläche des Einschnitts und einer Fläche des Mitnehmers untergebracht ist.

5. Kraftfahrzeuggetriebe nach Anspruch 4, in welchem eine Öffnung (39) in einer Seitenwand (38) des Zahnkranzes (32) geschaffen ist und sich zum Einschnitt (34) hin öffnet, durch welche Öffnung der Mitnehmer während des Zusammenbaus des zumindest einen nicht lösbaren Zahnrads axial eingesetzt wird.

6. Kraftfahrzeuggetriebe nach Anspruch 4 oder 5, in welchem der Zahnkranz (32) an seiner Innenumfangsfläche eine Anzahl gleichförmig beabstandeter Einschnitte (34) umfaßt, wobei in jeden ein jeweiliger radial auswärts gerichteter Mitnehmer (35) vorkragt, der auf dem Nabenabschnitt geschaffen ist.

7. Kraftfahrzeuggetriebe nach Anspruch 3, in welchem die Antriebswelle ein Kupplungsmittel (11) umfaßt, das eine erste Einrückposition aufweist, um das lösbare Zahnrad (10) an der Antriebswelle festzustellen, eine zweite Einrückposition besitzt, um die Abtriebswelle an der Antriebswelle festzustellen, was den vierten Vorwärtsgang bereitstellt, und eine Zwischenneutralposition aufweist, um das lösbare Zahnrad (10) und die Abtriebswelle von der Antriebswelle zu lösen.

## Revendications

1. Boîte de vitesses pour véhicule automobile comprenant:
- un arbre d'entrée (2) portant des roues dentées (7 à 9),
- deux arbres intermédiaires (3 et 4) portant des roues dentées (20,21 et 17) engrenant avec des roues dentées de l'arbre d'entrée pour former des paires de roues dentées (20/8,21/9 et 17/7) qui coopèrent,
- au moins une roue dentée de chaque paire de roues dentées qui coopèrent étant libérable de son arbre si bien qu'un seul des deux arbres intermédiaires (3 et 4) peut être entraîné à la fois, et
- un arbre de sortie (5) portant une roue dentée (15) coopérant avec une roue dentée fixe (13,14) prévue sur chacun des arbres intermédiaires, caractérisée en ce que
- une roue dentée libérable (10) est prévue sur l'arbre d'entrée et engrène avec deux roues dentées (16,30) de tailles identiques, chacune d'elles étant agencée de façon non libérable sur son arbre intermédiaire respectif, et
- au moins une des roues dentées non libérable comprend une partie formant moyeu (31) et un anneau denté (32), la partie formant moyeu étant fixée sur l'arbre intermédiaire tandis que l'anneau denté peut tourner de façon restrictive par rapport à la partie formant moyeu, et des moyens formant ressorts prétendus (33) sont opérationnels entre l'anneau denté et la partie formant moyeu.

2. Boîte de vitesses pour moteur de véhicule selon la revendication 1, dans laquelle ladite au moins une roue dentée non libérable (30) est une roue dentée co-tournante n'ayant pas de fonction de transmission de couple, tandis que l'autre roue dentée non libérable (16) est agencée pour transmettre un couple à son arbre intermédiaire (3) associé.

3. Boîte de vitesses pour moteur de véhicule selon la revendication 1 ou 2, comportant cinq pignons de marche avant et un pignon de marche arrière, de manière que le couple dans les premier, second et troisième pignons de marche avant soit transmis par l'intermédiaire dudit au moins un arbre intermédiaire, et de manière que le couple dans les cinquième pignon et pignon de marche arrière soit transmis par l'intermédiaire de l'autre arbre intermédiaire qui est muni de ladite au moins une roue dentée non libérable (30).

4. Boîte de vitesses pour moteur de véhicule selon l'une quelconque des revendications 1 à 3, dans laquelle l'anneau denté comprend sur sa surface circonférentielle interne au moins un enfoncement (34) dans lequel un crabot (35) de la partie formant moyeu (31) fait saillie en étant dirigé radialement vers l'extérieur, et dans lequel un organe formant ressort (33) est agencé entre une surface d'extrémité de l'enfoncement et une surface du crabot.

5. Boîte de vitesses pour moteur de véhicule selon le revendication 4, dans laquelle une ouverture (39) est prévue dans une paroi de côté (38) de l'anneau denté (32) et s'ouvre vers l'enfoncement (34) dans l'ouverture duquel le crabot (35) est inséré axialement pendant l'assemblage de ladite au moins une roue dentée non libérable.

6. Boîte de vitesses de moteur de véhicule selon la revendication 4 ou 5, dans lequel l'anneau denté (32) comprend sur sa surface circonférentielle interne une pluralité d'enfoncements (34) espacés uniformément dans chacun desquels fait saillie un crabot (35) dirigé radialement vers l'extérieur ménagé dans la partie formant moyeu (31).

7. Boîte de vitesses pour moteur de véhicule selon la revendication 3, dans laquelle l'arbre d'entrée comprend des moyens d'embrayage (11) présentant une première position de prise pour verrouiller la roue dentée libérable (10) sur l'arbre d'entrée, une seconde position de prise pour verrouiller l'arbre de sortie (5) sur l'arbre d'entrée présentant le quatrième pignon de marche avant et une position neutre intermédiaire pour libérer la roue dentée libérable (10) et l'arbre de sortie de l'arbre d'entrée.
